# EUROPÄISCHE PATENTSCHRIFT

(11) **EP 2 122 413 B1**
(45) Veröffentlichungstag und Bekanntmachung des Hinweises auf die Patenterteilung: **04.12.2013**
(21) Anmeldenummer: 08706772.4
(22) Anmeldetag: 18.01.2008
(51) Int. Cl.: G02F 1/35

(54) **VERFAHREN UND ANORDNUNG ZUR FREQUENZKONVERTIERUNG KOHÄRENTER OPTISCHER STRAHLUNG**
METHOD AND ARRANGEMENT FOR THE FREQUENCY CONVERSION OF COHERENT OPTICAL RADIATION
PROCÉDÉ ET AGENCEMENT POUR LA CONVERSION DE FRÉQUENCE DE RAYONNEMENT OPTIQUE COHÉRENT

(30) Priorität: 19.01.2007 DE 102007002821
(43) Veröffentlichungstag der Anmeldung: 25.11.2009
(73) Patentinhaber: Fraunhofer-Gesellschaft zur Förderung der angewandten Forschung e.V., 80686 München (DE)
(72) Erfinder: JUNGBLUTH, Bernd, 52074 Aachen (DE); HÖFER, Marco, 52072Aachen (DE); LÖHRING, Jens, 52062 Aachen (DE)
(74) Vertreter: Gagel, Roland
(86) Internationale Anmeldenummer: PCT/DE2008/000087
(87) Internationale Veröffentlichungsnummer: WO 2008/086790

(56) Entgegenhaltungen:
- US-A1- 2005 094 682
- US-A1- 2005 163 173
- JUNGBLUTH B ET AL: "Design and characterization of a rugged and compact setup for widely tunable harmonic generation in the ultraviolet" PROC SPIE INT SOC OPT ENG; PROCEEDINGS OF SPIE - THE INTERNATIONAL SOCIETY FOR OPTICAL ENGINEERING; NONLINEAR FREQUENCY GENERATION AND CONVERSION: MATERIALS, DEVICES, AND APPLICATIONS VI 2007, Bd. 6455, 23. Januar 2007 (2007-01-23), Seite 645502-1, XP002477846
- RINES G A ET AL: "Nonlinear conversion of Ti:sapphire laser wavelengths" IEEE Journal of Selected Topics in Quantum Electronics USA, Bd. 1, Nr. 1, April 1995 (1995-04), Seiten 50-57, XP002477847 ISSN: 1077-260X
- JUNGBLUTH B ET AL: "Widely tunable Ti:sapphire laser with highly efricient difference frequency generation in the visible spectral range" LASERS AND ELECTRO-OPTICS EUROPE, 2005. CLEO/EUROPE. 2005 CONFERENCE ON MUNICH, GERMANY 12-17 JUNE 2005, PISCATAWAY, NJ, USA,IEEE, 12. Juni 2005 (2005-06-12), Seiten 41-41, XP010879684 ISBN: 0-7803-8974-3
- GHOTBI M ET AL: "Optical second harmonic generation properties of BiB3O 6" OPT. EXPRESS; OPTICS EXPRESS NOVEMBER 2004, Bd. 12, Nr. 24, November 2004 (2004-11), Seite 6002, XP002477848
- GHOTBI M ET AL: "Efficient generation of high-energy picosecond pulses at 355 nm in BiB3O6", LASERS AND ELECTRO-OPTICS EUROPE, 2005. CLEO/EUROPE. 2005 CONFERENCE O N MUNICH, GERMANY 12-17 JUNE 2005, PISCATAWAY, NJ, USA,IEEE, 12 June 2005 (2005-06-12), pages 238-238, XP010879878, DOI: 10.1109/CLEOE.2005.1568024 ISBN: 978-0-7803-8974-8

## Beschreibung

### Technisches Anwendungsgebiet

Die vorliegende Erfindung betrifft ein Verfahren sowie eine Anordnung zur Frequenzkonvertierung von kohärenter optischer Strahlung einstellbarer Wellenlänge, bei denen eine Ausgangsfrequenz der Strahlung durch einen zweistufigen nichtlinearen optischen Prozess in eine höhere Frequenz konvertiert wird, indem in einem ersten Konversionsschritt in einem ersten nichtlinear-optischen Kristall eine Frequenzverdopplung und in einem zweiten Konversionsschritt in einem zweiten nichtlinear-optischen Kristall eine Summenfrequenzerzeugung oder Frequenzverdopplung erfolgen.

Die Erfindung betrifft damit vor allem das Gebiet der Lasertechnik, insbesondere den Bereich nichtlinear optischer Frequenzkonversion breitbandig abstimmbarer Laserquellen. Eine bevorzugte Anwendung stellt die Erzeugung von Laserstrahlung mit einer kontinuierlich einstellbaren Wellenlänge vom grünen Wellenlängenbereich bis in den UV-Bereich dar, insbesondere im Bereich zwischen 205 nm und 510 nm.

### Stand der Technik

Bei bekannten Verfahren und Anordnungen zur Frequenzkonvertierung wird hochintensive, kohärente elektromagnetische Strahlung mit einer im Bereich zwischen etwa 680 nm und 1020 nm einstellbaren Wellenlänge in die Konverteranordnung eingekoppelt. Basierend auf dem Prinzip der nichtlinearen optischen Dreiwellenmischung, spezieller der nichtlinearen optischen Erzeugung höherer Harmonischer der Ausgangsfrequenz, wird die fundamentale Strahlung in der Konverteranordnung in Strahlung im Wellenlängenbereich zwischen 205 nm und 510 nm gewandelt. Dazu werden in Abhängigkeit von der zu erzeugenden Wellenlänge drei unterschiedliche Konversionsprozesse genutzt, und zwar zur Erzeugung elektromagnetischer Strahlung im Wellenlängenbereich
- von etwa 340 nm bis etwa 510 nm Frequenzverdopplung (SHG: Second Harmonic Generation),
- von etwa 250 nm bis etwa 340 nm Frequenzverdreifachung (THG: Third Harmonic Generation) und
- von etwa 205 nm bis etwa 250 nm Frequenzvervierfachung (FHG: Fourth Harmonic Generation).

Dieses grundlegende Prinzip wird auch bei dem Verfahren und der Anordnung der vorliegenden Erfindung genutzt. Die Grenzen zwischen den einzelnen Bereichen - sowie die langwellige Grenze der Frequenzverdopplung können entsprechend den Eigenschaften der eingangsseitig verwendeten Strahlungsquelle um etwa 10 nm verschoben sein. Die kurzwellige Grenze der Frequenzvervierfachung beruht auf physikalischen Eigenschaften des derzeit in der Regel zur Frequenzvervierfachung eingesetzten nichtlinear-optischen Materials BBO (Beta-Bariumborat). Kürzere Wellenlängen bis etwa 190 nm können ausgangsseitig in einer zusätzlichen Konverterstufe durch nichtlineare optische Summenfrequenzbildung der frequenzverdreifachten Strahlung mit nicht konvertierten Anteilen der fundamentalen Strahlung erzeugt werden.

Die Frequenzverdreifachung erfolgt durch einen zweistufigen nichtlinearen optischen Prozess. Zunächst wird in einem ersten nichtlinear-optischen Kristall, dem Verdoppler-Kristall, eine Frequenzverdopplung eines Teils der fundamentalen Strahlung durchgeführt. Anschließend wird in einem zweiten nichtlinear-optischen Kristall, dem Verdreifacher-Kristall, die Summenfrequenz aus der im ersten Kristall generierten frequenzverdoppelten Strahlung und der restlichen fundamentalen Strahlung bei der Ausgangsfrequenz erzeugt. Bisher werden hierfür zwei unterschiedliche Konversionsschemata eingesetzt:
1. SHG Typ I (ooe) und THG Typ I (ooe) :
   (750-1020) nm |o> + (750-1020) nm |o> → (375-510)nm |e>
   (750-1020) nm |o> + (375-510) nm |o> → (250-340) nm |e>
2. SHG Typ I (ooe) und THG Typ II (eoe):
   (750-1020) nm |o> + (750-1020)nm |o> → (375-510)nmle>
   (750-1020) nm |e> + (375-510)nm |o> → (250-340) nm| e>
wobei mit "o" der ordentlich polarisierte und mit "e" der außerordentlich polarisierte Strahlanteil im jeweiligen Kristall bezeichnet ist. Für die zwischen den beiden Stufen dieser Prozesse erforderliche Polarisationsdrehung müssen geeignete Optiken eingesetzt werden. Allerdings stehen beim heutigen Stand der Technik keine Optiken zur gleichzeitigen Strahlformung oder unabhängigen Polarisationsänderung beider Frequenzbänder in ausreichender Qualität zur Verfügung.

Es bleibt daher zum einen die Möglichkeit, die beiden Strahlungsfelder in den unterschiedlichen Frequenzbändern hinter dem ersten Kristall zu trennen, dann separat zu behandeln, d. h. Optiken zur Beeinflussung von Strahlform und Polarisation einzusetzen, und anschließend vor dem zweiten Kristall wieder zu kombinieren. Ein Beispiel für eine derartige Vorgehensweise findet sich in der US 6816520 B1.

Die zweite, vorteilhaftere Möglichkeit besteht darin, die Orientierung der beiden Kristalle so zu wählen, dass keine zusätzlichen Optiken zwischen den beiden Kristallen erforderlich sind. Dies ist bspw. in G. A. Rines et al., "Nonlinear conversion of Ti:Sapphire Laser Wavelengths"; IEEE Journal of Selected Topics in Quantum Electronics, Vol.1, No.1, April 1995, Seiten 50 bis 57 beschrieben. Hierbei wird der Hauptschnitt des Verdreifacher-Kristalls in transversaler Richtung um 90° gegenüber dem Hauptschnitt des Verdoppler-Kristalls gedreht, um die entsprechende Konversionsbedingung mit der richtigen Polarisationsrichtung der Strahlungsfelder gegenüber der Orientierung der Kristallachse zu erhalten. Dies ist allerdings nur bei der zweiten der oben genannten Konversionsschemata möglich. Demgegenüber ist die erste Möglichkeit prinzipiell bei beiden Konversionsschemata einsetzbar, hat jedoch den Nachteil einer hohen Empfindlichkeit gegen Richtungsänderungen des Eingangsstrahls. Derartige Richtungsänderungen führen aufgrund dispersiver Brechung zu einer relativen Verschiebung der beiden Strahlen im Verdreifacher-Kristall und damit zu einer geringeren Konversionseffizienz.

Die zweite Möglichkeit ist vorteilhaft, da hinter dem Verdoppler-Kristall inhärent eine nahezu perfekte räumliche Überlagerung von fundamentaler und frequenzverdoppelter Strahlung vorliegt, die bis zum Eintritt in den Verdreifacher-Kristall nicht aufgehoben wird. Allerdings führt die Drehung des Verdreifacher-Kristalls gegenüber dem Verdoppler-Kristall zu einer Einschränkung bei der Konvertierung von breitbandig abstimmbarer Strahlung. Für in der Wellenlänge abstimmbare Strahlung müssen die Kristalle zusätzlich in der Ebene des Hauptschnitts gedreht werden, um über das sog. Winkeltuning die für einen effizienten Konversionsprozess erforderliche Phasenanpassung bei den unterschiedlichen Wellenlängen zu erfüllen. Bei einer um 90° gedrehten Orientierung von Verdoppler-Kristall und Verdreifacher-Kristall müssen diese dann,bei der Einstellung unterschiedlicher Wellenlängen der fundamentalen Strahlung in zwei zueinander senkrechten Ebenen gedreht werden. Dies führt zu einer wenig kompakten Anordnung.

Weiterhin erfordert eine derartige Anordnung aufgrund des beim Drehen der Kristalle erzeugten Parallelversatzes der Strahlen Verdreifacher-Kristalle mit einer großen Apertur. Diese sind entsprechend teuer. Das größere Volumen erschwert in Kombination mit der relativ schlechten Wärmeleitfähigkeit auch das Temperieren der Kristalle. Durch die gekreuzte Orientierung der nichtlinearen Kristalle tritt in beiden transversalen Richtungen ein Auswandern der außerordentlich polarisierten Strahlungsfelder auf, Walkoff genannt. Um die Effizienz limitierende und Strahlqualität verschlechternde Auswirkung dieses Effekts zu reduzieren, muss der Strahlquerschnitt in den Kristallen in beiden transversalen Richtungen eine vergleichsweise große Halbachse aufweisen. Dies limitiert jedoch bei gegebener Eingangsleistung die Effizienz bestimmende Intensität des Strahlungsfeldes. Das zweite der oben genannten Konversionsschemata wird daher vor allem bei Laserquellen mit großer Pulsleistung und kleiner Wiederholfrequenz (kleiner 100 Hz) eingesetzt, nicht aber bei moderneren Lasern mit hoher Wiederholrate (größer 1 kHz) und vergleichsweise kleiner Pulsleistung.

M. Ghotbi et al., "Efficient generation of highenergy picosecond pulses at 355nm in BiB3O6", 2005 Conferfence on Lasers and Electro-Opitcs Europe, Seite 238, offenbaren ein Verfahren zur mehrstufigen Frequenzkonversion, bei dem als erster und als zweiter Kristall ein positiv doppelbrechender Kristall mit einer Phasenanpassung vom Typ I eingesetzt wird. Die Frequenzkonversion erfolgt in beiden Kristallen nach dem Konversionsschema (eeo). Die beiden Kristalle müssen hierbei zur Phasenanpassung in unterschiedlichen Raumebenen gedreht werden.

Die Aufgabe der vorliegenden Erfindung besteht darin, ein Verfahren sowie eine Anordnung zur Frequenzkonvertierung von in der Wellenlänge abstimmbarer kohärenter optischer Strahlung in einem zweistufigen nichtlinearen optischen Prozess anzugeben, die eine kompakte Bauweise der Anordnung bei hoher Konversionseffizienz ermöglichen.

### Darstellung der Erfindung

Die Aufgabe wird mit dem Verfahren und der Anordnung gemäß den Patentansprüchen 1 und 14 gelöst. Vorteilhafte Ausgestaltungen des Verfahrens und der Anordnung sind Gegenstand der Unteransprüche oder lassen sich der nachfolgenden Beschreibung sowie den Ausführungsbeispielen entnehmen.

Bei dem vorgeschlagenen Verfahren zur Frequenzkonvertierung optischer Strahlung einstellbarer Wellenlänge, d.h. von Strahlung einer optischen Strahlungsquelle mit einstellbarer Wellenlänge, bei dem eine Ausgangsfrequenz der Strahlung in einem zweistufigen nichtlinearen optischen Prozess in eine höhere Frequenz konvertiert wird, wird in einem ersten Konversionsschritt in einem ersten nichtlinear-optischen Kristall eine Frequenzverdopplung und in einem anschließenden zweiten Konversionsschritt in einem zweiten nichtlinear-optischen Kristall eine Summenfrequenzerzeugung oder Frequenzverdopplung durchgeführt. Die fundamentale Strahlung wird hierbei so in den ersten nichtlinear-optischen Kristall eingekoppelt, dass sich zumindest eine außerordentliche Welle bei der Ausgangsfrequenz im Kristall ausbreitet. Das Verfahren zeichnet sich vor allem dadurch aus, dass als erster nichtlinear-optischer Kristall ein positiv doppelbrechender Kristall, bspw. ein BIBO (Bismut-Triborat), eingesetzt wird, in dem die Frequenzverdopplung bei einer Phasenanpassung vom Typ I aus der außerordentlichen Welle bei der Ausgangsfrequenz nach dem Schema <eeo> erfolgt, so dass eine ordentliche Welle bei der doppelten Ausgangsfrequenz erzeugt wird. Der zweite nichtlinear-optische Kristall wird dabei so gewählt, dass eine Phasenanpassung durch Drehung des Kristalls in der gleichen Raumebene ermöglicht wird, in der auch der erste nichtlinear-optische Kristall zur Phasenanpassung gedreht werden muss. Unter der fundamentalen Strahlung ist hierbei die Strahlung der eingesetzten Strahlungsquelle bei der Ausgangsfrequenz zu verstehen, die zur Frequenzkonvertierung in die Konverteranordnung eingekoppelt wird.

Bei dem Verfahren und der zugehörigen Anordnung können eingangsseitig die gleichen Strahlungsquellen eingesetzt werden wie bei den bekannten Konversionsschemata des Standes der Technik. Allgemein betrifft dies kohärente Strahlungsquellen hoher Strahldichte, die in einem langwelligeren Bereich des elektromagnetischen Spektrums (VIS und/oder NIR) emittieren, wobei die Ausgangswellenlänge innerhalb gewisser Grenzen einstellbar bzw. abstimmbar ist und die spektrale Linienbreite im Vergleich zu diesem Abstimmbereich deutlich schmaler ist. Ein Beispiel für derartige Strahlungsquellen sind Ti:Saphir-Laser, die einen Abstimmbereich zwischen 670 nm und 1050 nm aufweisen können. Auch andere Strahlungsquellen abstimmbarer kohärenter Strahlung im sichtbaren und infraroten Spektralbereich lassen sich selbstverständlich einsetzen, wie bspw. optisch parametrische Oszillatoren (OPO), Farbstofflaser, Diodenlaser mit externer Kavität oder andere abstimmbare Festkörperlaser.

Durch die Wahl eines positiv doppelbrechenden nichtlinear-optischen Kristalls für die Frequenzverdopplung in Verbindung mit der geeigneten Wahl des zweiten nichtlinear-optischen Kristalls wird erreicht, dass eine Phasenanpassung beider Kristalle bei Änderung der Eingangswellenlänge durch eine Drehung in der gleichen Raumebene erfolgen kann und keine zusätzliche Polarisationsdrehung der Strahlung zwischen den beiden Kristallen erfolgen muss. Die beiden Kristalle können damit ohne zwischengeschaltete Optiken zur Strahlformung oder Änderung der Polarisation unmittelbar hintereinander angeordnet werden. Ein Trennen und Rekombinieren unterschiedlicher Frequenzbänder ist nicht erforderlich. Die Polarisationsrichtungen aller beteiligter Strahlungsfelder sind jeweils so orientiert, dass die Rotationsachsen beider nichtlinear-optischer Kristalle für eine Phasenanpassung mittels Winkeltuning parallel stehen. Dies ermöglicht eine sehr kompakte Anordnung, die zudem unempfindlich gegen eingangsseitige Änderungen der Strahlrichtung ist.

Die frequenzkonvertierte Strahlung lässt sich in vielen technischen Bereichen einsetzen, vor allem im Bereich der Lasermesstechnik, bspw. zur hochempfindlichen Stoffanalyse mittels Laser-SNMS (Sekundärneutralteilchen-Massenspektrometrie mit lasergestützter Nachionisierung). Andere etablierte Einsatzgebiete sind Atmosphärenuntersuchungen, LIDAR (Light Detection and Ranging), Lifesiences oder Spektroskopie.

Die zur Durchführung des Verfahrens vorgeschlagene Anordnung umfasst entsprechend einen ersten nichtlinear-optischen Kristall für eine Frequenzverdopplung, einen dem ersten nichtlinear-optischen Kristall nachgeschalteten zweiten nichtlinear-optischen Kristall für eine Summenfrequenzerzeugung oder Frequenzverdopplung, eine dem ersten nichtlinear-optischen Kristall vorgeschaltete Optik zur Erzeugung einer Strahltaille im Bereich der beiden Kristalle und jeweils eine Einrichtung zur Drehung der beiden Kristalle für eine Phasenanpassung bei unterschiedlichen Wellenlängen der fundamentalen Strahlung. Der erste nichtlinear-optische Kristall ist ein positiv doppelbrechender Kristall, in dem die Frequenzverdopplung bei einer Phasenanpassung vom Typ I aus einer außerordentlichen Welle der Ausgangsfrequenz nach dem Schema <eeo> erfolgt, so dass eine ordentliche Welle bei der doppelten Ausgangsfrequenz erzeugt wird. Der zweite nichtlinear-optische Kristall ist entsprechend dem Verfahren so gewählt, dass eine Phasenanpassung durch Drehung des Kristalls in der gleichen Raumebene ermöglicht wird, in der auch der erste nichtlinear-optische Kristall bei einer Phasenanpassung gedreht werden muss.

Ein besonderer Vorteil dieser Anordnung sowie des zugehörigen Verfahrens besteht darin, dass Kristalle für unterschiedliche Konversionsprozesse in mehreren Ebenen übereinander auf den gleichen Dreh- bzw. Rotationsmechaniken angebracht werden können. Ein Gesamtsystem für eine Verdopplung, Verdreifachung und Vervierfachung der Frequenz, d. h. mit drei unterschiedlichen Ebenen, zwischen denen umgeschaltet werden kann, ist damit deutlich kompakter zu realisieren als bei den aus dem Stand der Technik bekannten Konversionsschemata. Die Anordnung ist damit auch deutlich unempfindlicher gegenüber mechanischer Dejustage.

In einer vorteilhaften Ausgestaltung des vorgeschlagenen Verfahrens wird die fundamentale Strahlung so in den ersten nichtlinear-optischen Kristall eingekoppelt, dass sich sowohl eine ordentliche als auch eine außerordentliche Welle bei der Ausgangsfrequenz im Kristall ausbreiten. Dies kann durch Anordnung eines geeigneten Polarisationsdrehers vor dem ersten Kristall erfolgen. Alternativ kann die fundamentale Strahlung auch bereits korrekt polarisiert sein oder, unter Einbußen an Effizienz, unpolarisierte Strahlung in den ersten Kristall eingekoppelt werden. Im zweiten nichtlinear-optischen Kristall wird dann bei einer Phasenanpassung vom Typ I eine Summenfrequenz aus der ordentlichen Welle der fundamentalen Strahlung und der ordentlichen Welle bei der frequenzverdoppelten Strahlung nach dem Schema <ooe> erzeugt. Das Konversionsschema in dieser Ausgestaltung setzt sich damit aus SHG Typ I (eeo) und THG Typ I (ooe) zusammen.

In einer weiteren Ausgestaltung wird ein zweiter nichtlinear-optischer Kristall gewählt, mit dem bei einer Phasenanpassung vom Typ II eine Summenfrequenz aus der außerordentlichen Welle der fundamentalen Strahlung und der ordentlichen Welle der frequenzverdoppelten Strahlung nach dem Konversionsschema <eoe> erzeugt wird. Die effektive Nichtlinearität des <eoe>-Prozesses für die Verdreifachung ist zwar geringer als beim <ooe>-Prozess der vorangehenden Ausgestaltung. Allerdings handelt es sich hier nicht um ein Bypass-Schema, so dass im Prinzip die gesamte fundamental eingesetzte Energie den beiden Prozessschritten zur Verfügung steht, während in der vorangehenden Ausgestaltung immer der im ersten Konversionsschritt nicht vollständig konvertierte, außerordentlich polarisierte Leistungsanteil für den zweiten Konversionsschritt verloren ist. Bei entsprechender Auslegung kann die Anordnung daher bei dieser weiteren Ausgestaltung mindestens ebenso effizient betrieben werden wie bei der vorangehenden Ausgestaltung, wenn der gesamte Leistungsanteil der fundamentalen Strahlung mit außerordentlicher Polarisation in den ersten Kristall eingekoppelt wird.

In einer weiteren Ausgestaltung wird mit dem zweiten nichtlinear-optischen Kristall eine Frequenzvervierfachung durchgeführt. Hierbei wird im zweiten nichtlinear-optischen Kristall bei einer Phasenanpassung vom Typ I eine Frequenzverdopplung der ordentlichen Welle der frequenzverdoppelten Strahlung nach dem Konversionsschema <ooe> durchgeführt. Auch hier weist die im ersten Kristall erzeugte frequenzverdoppelte Strahlung bereits den richtigen Polarisationszustand für den anschließenden Vervierfachungsschritt im zweiten nichtlinear-optischen Kristall auf.

Die beiden Kristalle können sehr dicht aneinander angeordnet werden, so dass ihr Abstand auch bei einer effizienten Fokussierung noch deutlich weniger als eine halbe Rayleigh-Länge beträgt. Es müssen keine Optiken zur Strahlformung oder Änderung des Polarisationszustands der beiden Strahlungsfelder zwischen den Kristallen eingebracht werden. Die Strahlformung erfolgt für beide Konversionsschritte bzw. Prozessstufen durch eine gemeinsame Optik, die dem ersten Kristall, dem Verdoppler-Kristall vorgeschaltet ist. Dabei wird im Allgemeinen eine elliptische Strahlform im nichtlinearen Kristall eingestellt, um bei gegebenem Walkoff einen möglichst großen räumlichen Überlapp der Strahlen im Verdreifacher-Kristall (oder Vervierfacher-Kristall) einzustellen und bei gegebener Eingangsleistung gleichzeitig eine hohe Intensität zu erzeugen. Die große Halbachse des Strahlquerschnitts im Verdoppler-Kristall sollte dabei mindestens so groß sein, wie der Walkoff bei vorgegebener Länge des Verdoppler-Kristalls. Die Strahlformungsoptik weist hierbei vorteilhaft eine Möglichkeit auf, um die Lage der Strahltaille im Bereich zwischen den beiden Kristallen zur Leistungsoptimierung zu variieren.

Bei der vorgeschlagenen Anordnung werden die Hauptschnitte der beiden Kristalle vorzugsweise antiparallel zueinander orientiert, da dann der Strahlversatz beim Drehen des ersten Kristalls für die Phasenanpassung durch einen gegengerichteten Strahlversatz beim Drehen des zweiten Kristalls für die Phasenanpassung zumindest teilweise kompensiert wird. Die Güte dieser passiven Kompensation lässt sich durch angepasste Längen der beiden Kristalle optimieren. Vorzugsweise ist auf einer dritten Dreheinrichtung in Strahlrichtung hinter den beiden Kristallen ein weiteres optisches Element aus einem passiven dielektrischen Material angeordnet, bspw. in Quaderform, um einen verbleibenden Strahlversatz hinter den beiden Konversionsstufen zu kompensieren. Der jeweils benötigte Einstellwinkel dieser Kompensation kann als Funktion der Ausgangswellenlänge entweder über eine analytisch berechnete oder über eine messtechnisch ermittelte Wertetabelle automatisiert eingestellt oder in Kombination mit einem positionsempfindlichen Sensor aktiv geregelt werden.

In einer sehr vorteilhaften Ausgestaltung werden eine der Ausgestaltungen für die Frequenzverdreifachung und die Ausgestaltung für die Frequenzvervierfachung miteinander und/oder mit einer Ausgestaltung für eine reine Frequenzverdopplung in einem einzigen Aufbau kombiniert. Dazu können die Kristalle für die jeweiligen Prozesse in übereinander liegenden Ebenen auf den gleichen Dreheinrichtungen, bspw. Rotationstischen, angebracht werden. Eine schaltbare Anordnung zur Strahlumlenkung führt in diesem Fall die fundamentale Strahlung je nach gewünschter, zu erzeugender Wellenlänge entweder in die Ebene der Frequenzverdopplung, in die Ebene der Frequenzverdreifachung oder in die Ebene der Frequenzvervierfachung.

In einer vorteilhaften Weiterbildung der Anordnung oder des Verfahrens wird zumindest einer der drei Prozesse (SHG, THG und FHG), vorzugsweise alle drei Prozesse, wiederum auf mehrere Kristalle aufgeteilt. Diese Kristalle sind dann jeweils für speziellere (eingeschränkte) Wellenbereiche innerhalb des gesamten Konversionsbereichs der Anordnung besser optimiert, insbesondere im Hinblick auf die Oberflächenbeschichtung, als jeweils nur ein Kristall für den gesamten Bereich, und müssen zudem für die Phasenanpassung nicht so weit im Winkel gedreht werden. Durch Anordnung dieser Kristalle für unterschiedliche Wellenbereiche in weiteren Ebenen kann dann wiederum der gesamte Abstimm- bzw. Konversionsbereich abgedeckt werden.

### Kurze Beschreibung der Zeichnungen

Das vorgeschlagene Verfahren und die zugehörige Anordnung werden nachfolgend anhand von Ausführungsbeispielen in Verbindung mit den Zeichnungen nochmals kurz erläutert. Hierbei zeigen:
- Fig. 1: ein erstes Beispiel für eine Anordnung gemäß der vorliegenden Erfindung in Draufsicht;
- Fig. 2: ein zweites Beispiel für eine Anordnung gemäß der vorliegenden Erfindung in Draufsicht;
- Fig. 3: ein drittes Beispiel für eine Anordnung gemäß der vorliegenden Erfindung in Draufsicht;
- Fig. 4: ein viertes Beispiel für eine Anordnung gemäß der vorliegenden Erfindung in Draufsicht;
- Fig. 5: ein fünftes Beispiel für eine Anordnung gemäß der vorliegenden Erfindung in Seitenansicht; und
- Fig. 6: die beispielhafte Anordnung gemäß Figur 5 in Draufsicht.

### Wege zur Ausführung der Erfindung

Die nachfolgenden Ausführungsbeispiele zeigen verschiedene Ausgestaltungsmöglichkeiten der vorgeschlagenen Anordnung für die Frequenzkonversion der fundamentalen Strahlung eines Ti:Saphir-Lasers, der sich im Wellenlängenbereich zwischen 750 und 1020 nm abstimmen lässt. Beispiele für derartige Laser finden sich bspw. in der bereits genannten US 6816520 B1, in B. Jungbluth et al., "Resonator Designs of Widely Tunable Ti:Sapphire Lasers Covering a Large Pulse Energy Range", Advanced Solid-State Photonics 2005, Technical Digest, MF40, 2005 oder in B. Jungbluth et al., "High Performance, Widely Tunable Ti:Sapphire Laser with Nanosecond Pulses", Photonics West LASE Symposium 2006, Proceedings of SPIE, [6100-20], 2006.

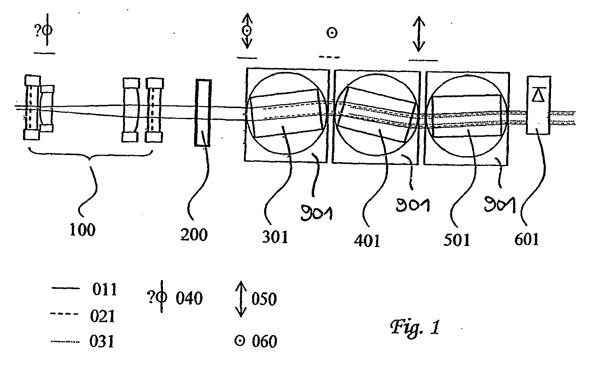

Bei dem Beispiel der Figur 1 erfolgt in einem zweistufigen nichtlinearen optischen Prozess eine Frequenzverdreifachung der fundamentalen Laserstrahlung, die bei dieser wie auch den anderen in den Ausführungsbeispielen gezeigten Anordnungen zwischen 750 und 1020 nm abstimmbar ist. Bei diesem Beispiel wird das folgende Konversionsschema verwendet:
SHG Typ I (eeo) und THG Typ I (ooe):
   (750-1020)nm |e> + (750-1020)nm |e> → (375-510)nm |o>
   (750-1020)nm |o> + (375-510)nm |o> → (250-340)nm |e>

Die für die Frequenzverdreifachung gewählte Anordnung setzt sich aus zwei nichtlinear-optischen Kristallen 301, 401 zusammen, die in Strahlrichtung des Lasers hintereinander angeordnet sind. Beide Kristalle 301, 401 sind jeweils auf einem Drehtisch 901 angeordnet, über den das Winkeltuning für die Phasenanpassung erfolgt. Bei dieser Ausgestaltung wird vor der durch die beiden Kristalle gebildeten Konvertiereinheit ein achromatischer Polarisationsdreher 200 eingefügt, der den ursprünglichen Polarisationszustand 040 der vom Laser kommenden fundamentalen Strahlung so beeinflusst, dass sich im ersten Kristall 301, dem Verdoppler-Kristall, sowohl eine ordentliche Komponente 060 wie auch eine außerordentliche Komponente 050 ausbreitet. In Form eines Bypass-Schemas wird nur der außerordentlich polarisierte Anteil 050 im Verdoppler-Kristall 301 konvertiert, d. h. in der Frequenz verdoppelt, während der ordentlich polarisierte Anteil 060 unkonvertiert transmittiert. Aus dem ersten Kristall 301 treten somit der ordentlich polarisierte Anteil der Ausgangsfrequenz der Laserstrahlung, der nach der Frequenzverdopplung noch verbleibende außerordentlich polarisierte Anteil der Ausgangsfrequenz der Laserstrahlung sowie die ordentlich polarisierte Strahlung bei der verdoppelten Frequenz 021 aus und in den sich anschließenden zweiten Kristall 401, den Verdreifacher-Kristall, ein. In diesem liegt dann die ordentlich polarisierte Strahlung bei der fundamentalen Frequenz 011, d.h. der Ausgangsfrequenz, und der verdoppelten Frequenz 021 vor und kann hier effektiv nach einem Typ I-Prozess in Strahlung bei der dreifachen Frequenz 031 konvertiert werden.

Durch die gewählte Anordnung mit einem positiv doppelbrechenden Kristall 301 und einem geeignet gewählten Kristall 401, bspw. einem BBO, kann das Winkeltuning für die Phasenanpassung für beide Kristalle durch eine Drehung in der gleichen (Raum-) Ebene erfolgen, wie aus Figur 1 ersichtlich ist. Die beiden Kristalle können ohne zusätzliche zwischengeschaltete Optik oder die Polarisation drehende Elemente sehr dicht hintereinander angeordnet werden. Die Strahlformung erfolgt für beide Kristalle durch eine gemeinsame Optik 100, die dem Verdoppler-Kristall vorgeschaltet ist.

In diesem wie auch den nachfolgenden Ausführungsbeispielen sind die Hauptschnitte der beiden Kristalle 301, 401 antiparallel zueinander ausgerichtet. Dadurch kann der Strahlversatz beim Winkeldrehen des Verdoppler-Kristalls 301 durch einen gegengerichteten Strahlversatz beim Winkeldrehen des Verdreifacher-Kristalls 401 zumindest teilweise kompensiert werden. Ein verbleibender Strahlversatz lässt sich durch einen geeigneten zusätzlichen Kompensator 501 kompensieren, der in den vorliegenden Ausführungsbeispielen in Form eines quaderförmigen, für die erzeugten Wellenlängen transparenten Materialblocks realisiert ist. Dieser Kompensator 501 ist ebenfalls auf einem Drehtisch 901 montiert, wobei durch die Drehung der zur Kompensation erforderliche entgegengesetzte Strahlversatz eingestellt werden kann.

Über das mit Polarisationsdreher 200 eingestellte Teilungsverhältnis zwischen dem außerordentlichen und dem ordentlich polarisierten Anteil der fundamentalen Strahlung im Verdoppler-Kristall 301 kann für jede Wellenlänge und Ausgangsleistung des Lasers das optimale Intensitätsverhältnis von fundamentaler und verdoppelter Strahlung im Verdreifacher-Kristall 401 eingestellt werden. Damit lässt sich für unterschiedliche Arbeitspunkte der fundamentalen Laserquelle immer eine optimale Konversionseffizienz der Anordnung einstellen.

In den dargestellten Ausführungsbeispielen wird die Leistung mindestens eines der Strahlungsfelder im Betrieb verlustarm mit einem Leistungsmessgerät 601 gemessen. Diese Messung wird vorzugsweise zum geregelten Einstellen der Phasenanpassungswinkel der beiden nichtlinear optischen Stufen sowie zum geregelten Einstellen der Polarisationsrichtung mit Hilfe des Polarisationsdrehers 200 genutzt. Hierzu sind sowohl der Polarisationsdreher wie auch sämtliche Drehtische 901 motorisch verstellbar und über eine in der Figur nicht dargestellte Steuereinheit ansteuerbar. Der Polarisationsdreher 200 und die Drehtische 901 werden dabei jeweils mit einer geeigneten Regelung auf maximale Konversionseffizienz, d. h. maximale Ausgangsleistung der frequenzverdreifachten Strahlung geregelt.

Durch automatisierte Ansteuerung des Drehtisches 901 für den Kompensator 501 kann auch der Strahlversatz automatisiert kompensiert werden, der sich bei unterschiedlichen Wellenlängen des abstimmbaren Lasers aufgrund der unterschiedlichen Winkelstellungen der beiden Kristalle für die Phasenanpassung ergibt. Hierzu kann eine analytisch berechnete oder auch eine messtechnisch ermittelte Wertetabelle vorgegeben werden, auf deren Basis die Drehung des Kompensators 501 in Abhängigkeit von der eingestrahlten fundamentalen Wellenlänge erfolgt. Alternativ oder in Kombination kann diese Drehung auch mit Hilfe eines nicht dargestellten positionsempfindlichen Detektors geregelt werden, der eine Abweichung von der gewünschten Strahlachse des frequenzverdreifachten Ausgangsstrahls detektiert. Diese Ausführungen gelten auch für die nachfolgenden Ausgestaltungen.

Unter Einbußen an Leistungsfähigkeit kann auch auf den Polarisationsdreher 200 verzichtet werden, wenn eingangsseitig an der Konvertereinheit ein Polarisationszustand der fundamentalen Laserstrahlung vorliegt, der sowohl eine Komponente mit ordentlicher als auch mit außerordentlicher Polarisation im Verdoppler-Kristall aufweist.

Richtungsinstabilitäten des Eingangsstrahls in der für die Konversionseffizienz sonst kritischen Richtung der nichtlinearen Kristalle führen in der beschriebenen Anordnung in erster Ordnung lediglich zu einer Änderung des Phasenanpassungswinkels, der über die Leistungs-überwachung nachgeführt wird. Die Strahlüberlagerung von fundamentalem und frequenzverdoppeltem Strahl im Sinne eines räumlichen Überlapps im Verdreifacher-Kristall 401 ist unabhängig von der Strahlrichtung des Eingangsstrahls. Lediglich die hier irrelevante absolute Lage und die Strahlrichtung im Verdreifacher-Kristall 401 sind betroffen. Letztere wird wiederum durch das Nachregeln des Phasenanpassungswinkels kompensiert. Als Kristallmaterial für den Schritt der Frequenzverdopplung ist bspw. BIBO geeignet. Als Material für den Schritt der Frequenzverdreifachung eignen sich bspw. KDP (Kalium-Dihydrogen-Phosphat), BBO oder CLBO (CsLiB₆O₁₀).

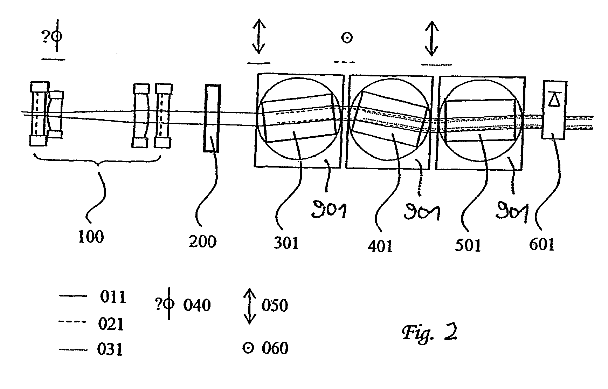

Figur 2 zeigt ein weiteres Beispiel einer möglichen Ausgestaltung der vorgeschlagenen Anordnung. Bei dieser Anordnung wird folgendes Konversionsschema eingesetzt:
SHG Typ I (eeo) und THG Typ II (eoe):
   (750-1020) nm. |e> + (750-1020)nm |e> → (375-510)nm |o>
   (750-1020)nm |e> + (375-510) nm |o> → (250-340)nm |e>

Die grundsätzliche Anordnung der einzelnen Kristalle 301, 401, der Optik 100, des Polarisationsdrehers 200, des Kompensators 501 sowie des Leistungsmessgerätes 601 entspricht denen der Figur 1. Lediglich die Schnittrichtung des Verdreifacher-Kristalls 401 wird bei dieser Ausgestaltung so gewählt, dass das obige Konversionsschema erfüllt ist. Die effektive Nichtlinearität des <eoe>-Prozesses für die Verdreifachung ist zwar geringer als beim vorher beschriebenen <ooe>-Prozess. Allerdings handelt es sich hier nicht um ein Bypass-Schema, d. h. dass im Prinzip die gesamte fundamental eingesetzte Energie den beiden Prozessstufen zur Verfügung steht, während im vorher behandelten Beispiel immer der im ersten Konversionsschritt nicht vollständig konvertierte, außerordentlich polarisierte Leistungsanteil für den zweiten Konversionsschritt verloren ist. Bei entsprechender Auslegung kann die Anordnung der Figur 2 daher mindestens ebenso effizient betrieben werden wie die Anordnung der Figur 1. Als Material für den Verdopplerschritt kann bspw. BIBO, für den Verdreifacherschritt bspw. BBO eingesetzt werden.

Bei der Anordnung der Figur 2 wird das Element zur Polarisationsdrehung 200 nicht benötigt, wenn die fundamentale Strahlung eingansseitig bereits die richtige Polarisationsrichtung (e) aufweist. Es kann hier keine Optimierung der Gesamteffizienz durch Einstellung der eingangsseitigen Polarisationsrichtung und damit des Leistungsverhältnisses von fundamentaler und frequenzverdoppelter Strahlung im Verdreifacher-Kristall durchgeführt werden. Ansonsten bleiben alle Vorteile und Ausführungsmöglichkeiten erhalten, die in Verbindung mit der Anordnung der Figur 1 bereits erläutert wurden. Insbesondere können die beiden Kristalle auch hier in engem Abstand ohne Zwischenoptiken positioniert werden. Die Wellenlängenabstimmung mittels Winkeltuning erfolgt ebenfalls für beide Kristalle durch Drehung in der gleichen Raumebene.

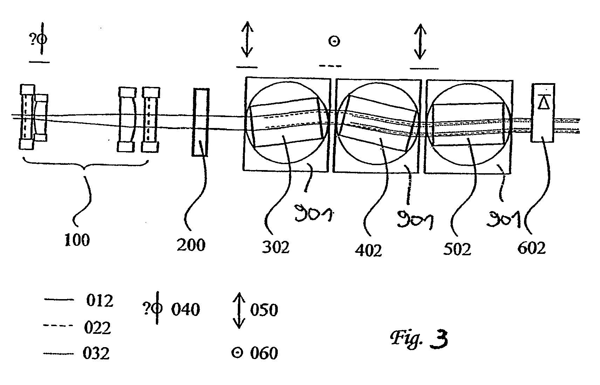

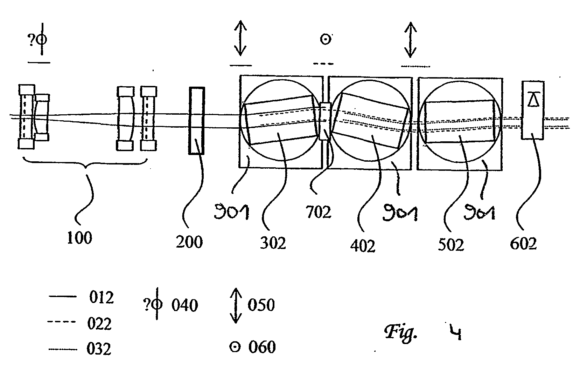

Die Figuren 3 und 4 zeigen Beispiele für eine Frequenzvervierfachung der fundamentalen Strahlung. Bei diesen Anordnungen wird folgendes Konversionsschema genutzt:
SHG Typ I (eeo) und FHG Typ I (ooe):
   (820-1000)nm |e> + (820-1000) nm |e> → (410-500)nm |o>
   (410-500)nm |o> + (410-500)nm |o> → (205-250)nm |e>

Auch hier ist die geometrische Anordnung mit Eingangsoptik 100, Polarisationsdreher 200, den Kristallen 302, 402, dem Kompensator 502 und dem Leistungsmessgerät 602 wieder geometrisch sehr ähnlich oder identisch der Anordnung der Figuren 1 und 2. Die Anordnung unterscheidet sich im Wesentlichen durch den zweiten Kristall 402, der für eine Frequenzverdopplung der aus dem ersten Kristall 302 bereits verdoppelten Strahlung ausgebildet ist. Ein Polarisationsdreher 200 kann verwendet werden, um die Polarisation 040 der einfallenden fundamentalen Strahlung 012 so zu verändern, dass im Verdoppler-Kristall 302 nur eine außerordentliche Welle 050 vorliegt, falls dies nicht schon a priori der Fall ist. Die erzeugte Strahlung bei der doppelten Frequenz 022 weist bereits den richtigen Polarisationszustand 060 für den anschließenden Vervierfachungsschritt auf.

Zwischen den beiden Kristallen kann bei dieser Ausgestaltung ein optisches Element 702, insbesondere ein Filter, angebracht werden (vgl. Figur 4), um die verbleibende Strahlung bei der fundamentalen Frequenz von der frequenzverdoppelten Strahlung vor dem Eintritt in den Vervierfacherkristall 402 zu trennen, da nur letztere benötigt wird, um die frequenzvervierfachte Strahlung 032 zu generieren.

Für die Strahlformung bei der Frequenzvervierfachung gelten analoge Gesetzmäßigkeiten wie im Falle der Frequenzverdreifachung. Insbesondere kann auch die gleiche Abbildungsoptik 100 für die Frequenzverdreifachung und die Frequenzvervierfachung benutzt werden.

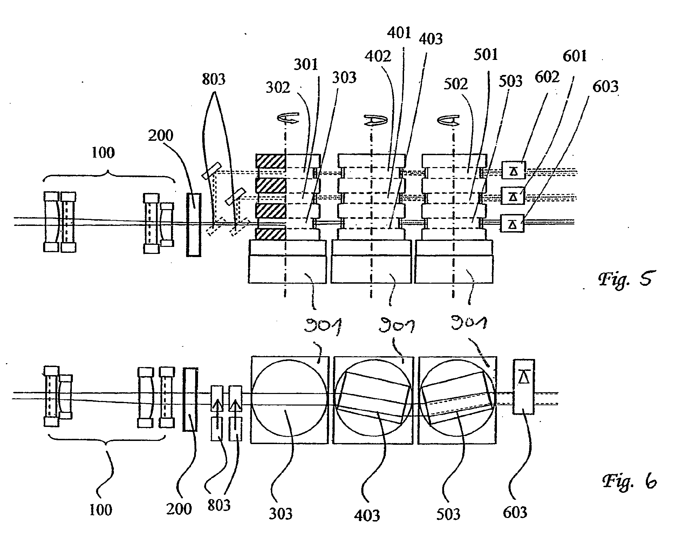

Die Anordnungen für die Frequenzverdreifachung (Figur 1 oder 2) und Frequenzvervierfachung (Figur 3 oder 4) können vorteilhaft in einem einzigen Aufbau kombiniert werden, wie er in den Figuren 5 und 6 schematisch dargestellt ist. Dazu werden die Kristalle für beide Prozesse, d. h. Frequenzverdreifachung und Frequenzvervierfachung, in zwei übereinander liegenden Ebenen auf den gleichen Drehtischen 901 angebracht. Zusätzlich kann auch eine Anordnung zum Verdoppeln in einer dritten Ebene auf diesen gleichen Drehtischen 901 angeordnet werden.

Eine derartige Konverteranordnung mit drei Ebenen ist in der Figur 5 in Seitenansicht schematisch angedeutet. Für eine reine Frequenzverdopplung wird im Prinzip nur ein Verdopplerkristall 403 und ein Kompensator 503 benötigt, während die Position eines weiteren nichtlinearen Kristalls 303 unbesetzt bleiben kann. Alternativ kann jedoch an dieser Position auch ein weiterer nichtlinearer Kristall 303 eingesetzt werden, wobei dann die beiden Kristalle dieser Ebene, d. h. die Kristalle 303 und 403, Verdoppler-Kristalle für unterschiedliche Wellenlängenbereiche sein können, so dass sich der benötigte Winkelbereich für die Phasenanpassung für jeden der beiden Kristalle vorteilhaft reduziert.

In dem dargestellten Beispiel der Figur 5 zeigt somit die unterste Ebene zwei Verdoppler-Kristalle 303, 403 für unterschiedliche Wellenlängen, die mittlere Ebene die beiden Kristalle 301, 401 für die Frequenzverdreifachung und die oberste Ebene die Kristalle 302, 402 für die Frequenzvervierfachung. Vorteilhaft wird für jede Ebene eine gesonderte Einheit zur Leistungsüberwachung 601, 602, 603 eingesetzt, auf deren Basis ein geregeltes Einstellen des Polarisationsdrehers 200 und der Phasenanpassungswinkel erfolgt.

Als Materialien für die Frequenzvervierfachung kommen für den ersten Kristall BIBO und für den zweiten Kristall BBO in Frage. Als Material für den Verdoppler-Kristall 303, 403 der untersten Ebene können BIBO, KDP, BBO, LBO (Lithiumtriborat) und CLBO eingesetzt werden.

Bei der Nutzung einer gemeinsamen Abbildungsoptik 100 für alle drei Konversionsprozesse können der Abstand der Ebenen, ihre Anordnung und der Abstand der Drehachsen so gewählt werden, dass die Strahltaille in jeder Ebene in einem der nichtlinearen Kristalle oder in dem Bereich zwischen zwei Kristallen liegt. Zur Optimierung der Effizienz können unter Einbußen an Einfachheit und Kompaktheit der Anordnung selbstverständlich auch separate Abbildungsoptiken für jeden Konversionsprozess eingesetzt werden.

Eine schaltbare Anordnung zur Strahlumlenkung 803, bspw. in Form von klappbaren Spiegeln, führt die fundamentale Strahlung je nach gewünschter Wellenlänge entweder in die Ebene der Frequenzverdopplung, in die Ebene der Frequenzverdreifachung oder in die Ebene der Frequenzvervierfachung.

Auf einem dritten Drehtisch 901 können passive dielektrische Materialien in Quaderform als Kompensatoren (501 bis 503) für einen verbleibenden Strahlversatz hinter den Konversionsstufen angeordnet werden. Der benötigte Einstellwinkel dieser Kompensatoren als Funktion der Ausgangswellenlänge kann auch hier, wie bereits in den vorangehenden Ausführungsbeispielen angeführt, entweder über eine analytisch berechnete oder eine messtechnisch ermittelte Wertetabelle angesteuert oder in Kombination mit einem positionsempfindlichen Sensor aktiv geregelt werden.

Die gesamte Anordnung aus Frequenzverdopplung, Frequenzverdreifachung und Frequenzvervierfachung, die in der Figur 6 nochmals in Draufsicht dargestellt,ist, deckt bei einem nutzbaren Abstimmbereich des fundamentalen Lasers zwischen 680 nm und 1020 nm nach der Frequenzkonvertierung den Wellenlängenbereich zwischen 205 nm und 510 nm kontinuierlich ab. Bei der Anordnung mehrerer Frequenzkonverter übereinander ist der Polarisationsdreher 200 zur Änderung der Polarisation des eingangsseitigen Strahlungsfeldes erforderlich, wenn für einen effizienten Betrieb jeweils unterschiedliche Orientierungen der Polarisation des fundamentalen Strahlungsfeldes im jeweiligen Verdopplerkristall benötigt werden.

### Bezugszeichenliste

- 011/012: fundamentale Strahlung
- 021/022: frequenzverdoppelte Strahlung
- 032: frequenzverdreifachte Strahlung
- 032: frequenzvervierfachte Strahlung
- 040: Eingangspolarisation der fundamentalen Strahlung
- 050: außerordentliche Polarisation
- 060: ordentliche Polarisation
- 100: Eingangsoptik
- 200: Polarisationsdreher
- 301/302/303: erster Kristall (Verdoppler-Kristall)
- 401: zweiter Kristall (Verdreifacher-Kristall)
- 402: zweiter Kristall (Vervierfacher-Kristall)
- 403: weiterer Kristall zur Frequenzverdopplung
- 501/502/503: Kompensator
- 601/602/603: Leistungsmessgerät
- 702: Filter
- 803: schaltbare Anordnung zur Strahlumlenkung
- 901: Drehtisch

## Patentansprüche

1. Verfahren zur Frequenzkonvertierung von kohärenter optischer Strahlung mit einstellbarer Wellenlänge, bei dem eine Ausgangsfrequenz der Strahlung durch einen zweistufigen nichtlinearen optischen Prozess in eine höhere Frequenz konvertiert wird,
indem in einem ersten Konversionsschritt in einem ersten nichtlinear-optischen Kristall (301, 302) eine Frequenzverdopplung und in einem zweiten Konversionsschritt in einem zweiten nichtlinear-optischen Kristall (401, 402) eine Summenfrequenzerzeugung oder Frequenzverdopplung von aus dem ersten nichtlinear-optischen Kristall (301, 302) austretender Strahlung erfolgen,
wobei
- die kohärente optische Strahlung so in den ersten nichtlinear-optischen Kristall (301, 302) eingekoppelt wird, dass sich zumindest eine außerordentliche welle der Ausgangsfrequenz im Kristall (301, 302) ausbreitet,
- als erster nichtlinear-optischer Kristall (301, 302) ein positiv doppelbrechender Kristall eingesetzt wird, in dem die Frequenzverdopplung bei einer Phasenanpassung vom Typ I aus der außerordentlichen Welle der Ausgangsfrequenz nach dem Konversionsschema <eeo> erfolgt, so dass eine ordentliche Welle der doppelten Ausgangsfrequenz erzeugt wird, und
- der zweite nichtlinear-optische Kristall (401, 402) so gewählt wird, dass eine Phasenanpassung durch Drehung des Kristalls (401, 402) in der gleichen Raumebene ermöglicht wird, in der auch der erste nichtlinear-optische Kristall (301, 302) bei einer Phasenanpassung gedreht werden muss.

2. Verfahren nach Anspruch 1,
bei dem die Strahlung so in den ersten nichtlinear-optischen Kristall (301, 302) eingekoppelt wird, dass sich sowohl eine ordentliche als auch eine außerordentliche Welle der Ausgangsfrequenz im Kristall (301, 302) ausbreiten, und im zweiten nichtlinear-optischen Kristall (401, 402) bei einer Phasenanpassung vom Typ I eine Summenfrequenz aus der ordentlichen Welle der Ausgangsfrequenz und der ordentlichen Welle der doppelten Ausgangsfrequenz nach dem Konversionsschema <ooe> erzeugt wird.

3. Verfahren nach Anspruch 1,
bei dem im zweiten nichtlinear-optischen Kristall (401, 402) bei einer Phasenanpassung vom Typ II eine Summenfrequenz aus der außerordentlichen welle der Ausgangsfrequenz und der ordentlichen Welle der doppelten Ausgangsfrequenz nach dem Konversionsschema <eoe> erzeugt wird.

4. Verfahren nach Anspruch 1,
bei dem im zweiten nichtlinear-optischen Kristall (401, 402) bei einer Phasenanpassung vom Typ I eine Frequenzverdopplung der ordentlichen Welle der doppelten Ausgangsfrequenz nach dem Schema <ooe> durchgeführt wird.

5. Verfahren nach einem der Ansprüche 1 bis 4,
bei dem bei dem als erster nichtlinear-optischer Kristall (301, 302) ein BIBO eingesetzt wird.

6. Verfahren nach einem der Ansprüche 1 bis 5,
bei dem Hauptschnitte der beiden nichtlinear-optischen Kristalle (301, 302, 401, 402) so orientiert werden, dass ein Strahlversatz beim Drehen des ersten nichtlinear-optischen Kristalls (301, 302) für die Phasenanpassung durch einen gegengerichteten Strahlversatz beim Drehen des zweiten nichtlinear-optischen Kristalls (401, 402) für die Phasenanpassung zumindest teilweise kompensiert wird.

7. Verfahren nach einem der Ansprüche 1 bis 6,
bei dem die beiden nichtlinear-optischen Kristalle (301, 302, 401, 402) in einem Abstand hintereinander angeordnet werden, der geringer als die halbe Rayleigh-Länge der Strahlung im Bereich der Kristalle (301, 302, 401, 402) ist.

8. Verfahren nach einem der Ansprüche 1 bis 7,
bei dem ein Strahlquerschnitt der Strahlung mit einer länglichen, insbesondere elliptischen, Querschnittsform mit einer zum Hauptschnitt parallelen und einer dazu senkrechten Halbachse in den beiden nichtlinear-optischen Kristallen (301, 302, 401, 402) eingestellt wird, wobei die zum Hauptschnitt parallele Halbachse so dimensioniert wird, dass jeweils die ordentlichen und außerordentlichen Wellen über die gesamte Länge der Kristalle (301, 302, 401, 402) überlappen, und die Größe der dazu senkrechten Halbachse unabhängig im Hinblick auf hohe Intensität optimiert wird.

9. Verfahren nach Anspruch 8,
bei dem der Strahlquerschnitt für beide nichtlinear-optische Kristalle (301, 302, 401, 402) in einer dem ersten Kristall (301, 302) vorgeschalteten Optik (100) eingestellt wird.

10. Verfahren nach einem der Ansprüche 1 bis 9,
bei dem ein Verhältnis der Anteile von ordentlicher und außerordentlicher Welle der Ausgangsfrequenz im ersten Kristall (301, 302) über einen dem ersten Kristall (301, 302) vorgeschalteten Polarisationsdreher (200) eingestellt wird.

11. Verfahren nach Anspruch 10,
bei dem das Verhältnis der Anteile von ordentlicher und außerordentlicher Welle der Ausgangsfrequenz im ersten Kristall (301, 302) in Abhängigkeit von einer Leistung und/oder Wellenlänge der Strahlung so eingestellt wird, dass sich für die jeweilige Leistung und/oder Wellenlänge eine maximale Konversionseffizienz ergibt.

12. Verfahren nach Anspruch 10 oder 11,
bei dem eine Ausgangsleistung frequenzkonvertierter Strahlung nach dem ersten (301, 302) und/oder zweiten Kristall (401, 402) gemessen und einer Regelung zugeführt wird, die über eine Ansteuerung eines Antriebes für eine Drehung des Polarisationsdrehers (200) und/oder eines oder mehrerer Antriebe für eine Drehung des ersten (301, 302) und/oder zweiten Kristalls (401, 402) zur Phasenanpassung die Ausgangsleistung maximiert.

13. Verfahren nach einem der Ansprüche 1 bis 12 zur Erzeugung kohärenter Strahlung im Wellenlängenbereich zwischen 205 und 510 nm.

14. Anordnung zur Frequenzkonvertierung von kohärenter optischer Strahlung, bei der eine Ausgangsfrequenz der Strahlung durch einen zweistufigen nichtlinearen optischen Prozess in eine höhere Frequenz konvertiert wird, mit mindestens
- einem ersten nichtlinear-optischen Kristall (301, 302) für eine Frequenzverdopplung,
- einem dem ersten nichtlinear-optischen Kristall (301, 302) nachgeschalteten zweiten nichtlinear-optischen Kristall (401, 402) für eine Summenfrequenzerzeugung oder Frequenzverdopplung von aus dem ersten nichtlinear-optischen Kristall (301, 302) austretender Strahlung,
- einer dem ersten nichtlinear-optischen Kristall (301, 302) vorgeschalteten Optik (100) zur Erzeugung einer Strahltaille im Bereich der beiden nichtlinear-optischen Kristalle (301, 302, 401, 402), und
- jeweils einer Einrichtung (901) zur Drehung der beiden nichtlinear-optischen Kristalle (301, 302, 401, 402) für eine Phasenanpassung bei unterschiedlichen Wellenlängen der Strahlung,
wobei
- der erste nichtlinear-optische Kristall (301, 302) ein positiv doppelbrechender Kristall ist, in dem die Frequenzverdopplung bei einer Phasenanpassung vom Typ I aus einer außerordentlichen Welle der Ausgangsfrequenz nach dem Konversionsschema <eeo> erfolgt, so dass eine ordentliche Welle der doppelten Ausgangsfrequenz erzeugt wird, und
- der zweite nichtlinear-optische Kristall (401, 402) so gewählt ist, dass eine Phasenanpassung durch Drehung des Kristalls (401, 402) in der gleichen Raumebene ermöglicht wird, in der auch der erste nichtlinear-optische Kristall (301, 302) bei einer Phasenanpassung gedreht werden muss.

15. Anordnung nach Anspruch 14,
bei dem ein Leistungsmessgerät (601, 602, 603) zur Messung einer Ausgangsleistung frequenzkonvertierter Strahlung nach dem ersten (301, 302) und/oder zweiten Kristall (401, 402) und eine Regelungseinheit vorgesehen sind, die auf Basis eines vom Leistungsmessgerät (601, 602, 603) erhaltenen Messsignals einen oder mehrere Antriebe für die Dreheinrichtungen (901) zur Drehung der beiden nichtlinear-optischen Kristalle (301, 302, 401, 402) so ansteuert, dass die Ausgangsleistung maximiert wird.

16. Anordnung nach Anspruch 14,
bei der vor dem ersten nichtlinear-optischen Kristall (301, 302) ein Polarisationsdreher (200) angeordnet ist, mit dem ein Verhältnis der Anteile von ordentlicher und außerordentlicher Welle der Ausgangsfrequenz im ersten nichtlinear-optischen Kristall (301, 302) einstellbar ist.

17. Anordnung nach Anspruch 16,
bei dem ein Leistungsmessgerät (601, 602, 603) zur Messung einer Ausgangsleistung frequenzkonvertierter Strahlung nach dem ersten (301, 302) und/oder zweiten Kristall (401, 402) und eine Regelungseinheit vorgesehen sind, die auf Basis eines vom Leistungsmessgerät (601, 602, 603) erhaltenen Messsignals einen Antrieb für eine Drehung des Polarisationsdrehers (200) und/oder einen oder mehrere Antriebe für die Dreheinrichtungen (901) zur Drehung der beiden nichtlinear-optischen Kristalle (301, 302, 401, 402) so ansteuert, dass die Ausgangsleistung maximiert wird.

18. Anordnung nach einem der Ansprüche 14 bis 17,
bei der Hauptschnitte der beiden nichtlinear-optischen Kristalle (301, 302, 401, 402) so orientiert sind, dass ein Strahlversatz beim Drehen des ersten nichtlinear-optischen Kristalls (301, 302) für die Phasenanpassung durch einen gegengerichteten Strahlversatz beim Drehen des zweiten nichtlinear-optischen Kristalls (401, 402) für die Phasenanpassung zumindest teilweise kompensiert wird.

19. Anordnung nach einem der Ansprüche 14 bis 18,
bei dem die beiden nichtlinear-optischen Kristalle (301, 302, 401, 402) ohne zwischengeschaltete optische Elemente hintereinander angeordnet sind.

20. Anordnung nach einem der Ansprüche 14 bis 19,
bei dem hinter dem zweiten nichtlinear-optischen Kristall (401, 402) eine drehbare Korrektureinheit (501, 502, 503) zum Ausgleich eines Strahlversatzes angeordnet ist.

21. Anordnung nach einem der Ansprüche 14 bis 20,
bei dem die beiden nichtlinear-optischen Kristalle (301, 401) eine erste Konversionseinheit für eine Frequenzverdreifachung in einer ersten Ebene bilden und eine zweite gleichartige Konversionseinheit für eine Frequenzvervierfachung in einer zweiten Ebene oberhalb oder unterhalb der ersten Ebene so angeordnet ist, dass jeweils die ersten (301, 302) und die zweiten nichtlinear-optischen Kristalle (401, 402) jeder Konversionseinheit einen Stapel bilden und mit der gleichen Dreheinrichtung (901) zur Phasenanpassung einstellbar sind, und bei dem eine umschaltbare Einrichtung (803) zur Strahlumlenkung zwischen den beiden Ebenen vor den ersten nichtlinear-optischen Kristallen (301, 302) angeordnet ist.

22. Anordnung nach Anspruch 21,
bei dem zumindest ein dritter nichtlinear-optischer Kristall (303, 403) für eine Frequenzverdopplung in einer dritten Ebene angeordnet ist, wobei der dritte nichtlinear-optische Kristall (303, 403) mit den ersten (301, 302) oder zweiten nichtlinear-optischen Kristallen (401, 402) einen Stapel bildet und mit der gleichen Dreheinrichtung (901) zur Phasenanpassung einstellbar ist, und bei dem die umschaltbare Einrichtung (803) zur Strahlumlenkung so ausgebildet ist, dass sie die Strahlung zur Frequenzkonvertierung zwischen den drei Ebenen umschalten kann.

23. Anordnung nach einem der Ansprüche 16 bis 22, die für die Frequenzkonvertierung von kohärenter optischer Strahlung eines Wellenlängenbereiches ausgebildet ist und für zumindest einen Konversionsprozess mehrere nichtlinear-optische Kristalle (301-303, 401-403) umfasst, die im Hinblick auf Orientierung und Oberflächenbeschichtung für kleinere Spektralbereiche innerhalb des Wellenlängenbereiches auf eine hohe Konversionseffizienz hin optimiert sind, wobei jeweils mehrere der nichtlinear-optischen Kristalle (301-303, 401-403), die für unterschiedliche kleinere Spektralbereiche optimiert sind, in mehreren Ebenen übereinander auf der gleichen Dreheinrichtung (901) angeordnet sind.

## Claims

1. A method for the frequency conversion of coherent optical radiation with an adjustable wavelength,
in which an output frequency of the radiation is converted by way of a two-stage non-linear optical process into a higher frequency, in that a frequency doubling is carried out in a first conversion step in a first non-linear optical crystal (301, 302), and a sum frequency generation or a frequency doubling of radiation output from the first non-linear optical crytal (301, 302) is carried out in a second non-linear optical crystal (401, 402) in a second conversion step, wherein
- the coherent optical radiation is coupled into the first non-linear optical crystal (301, 302) such that at least one extraordinary wave of the output frequency propagates in the crystal (301, 302),
- a positively birefringent crystal is used as the first non-linear optical crystal (301, 302), in which a frequency doubling takes place with a type I phase matching from the extraordinary wave at the output frequency according to the <eeo> conversion scheme, such that an ordinary wave is generated at the doubled output frequency, and
- the second non-linear optical crystal (401, 402) is selected such that a phase matching is enabled by rotation of the crystal (401, 402) in the same spatial plane in which the first non-linear optical crystal (301, 302) must also be rotated for phase matching.

2. The method according to Claim 1,
in which the radiation is coupled into the first non-linear optical crystal (301, 302), such that both an ordinary and also an extraordinary wave of the output frequency propagate in the crystal (301, 302), and in the second non-linear optical crystal (401, 402) with a type I phase matching a sum frequency is generated from the ordinary wave of the output frequency and the ordinary wave of the doubled output frequency according to the <ooe> conversion scheme.

3. The method according to Claim 1,
in which in the second non-linear optical crystal (401, 402) in a type II phase matching a sum frequency is generated from the extraordinary wave of the output frequency and the ordinary wave of the doubled output frequency according to the <eoe> conversion scheme.

4. The method according to Claim 1,
in which in the second non-linear optical crystal (401, 402) in a type I phase matching a frequency doubling of the ordinary wave of the doubled output frequency is carried out according to the <ooe> scheme.

5. The method according to one of the Claims 1 to 4,
in which a BIBO is deployed as the first non-linear optical crystal (301, 302) .

6. The method according to one of the Claims 1 to 5, in which principal sections of the two non-linear optical crystals (301, 302, 401, 402) are oriented such that a beam displacement during rotation of the first non-linear optical crystal (301, 302) for a phase matching is at least partially compensated by a beam displacement in the opposite sense during rotation of the second non-linear optical crystal (401, 402) for a phase matching.

7. The method according to one of the Claims 1 to 6,
in which the two non-linear optical crystals (301, 302, 401, 402) are arranged with a separation one behind the other that is less than half the Rayleigh length of the radiation in the region of the crystals (301, 302, 401, 402).

8. The method according to one of the Claims 1 to 7,
in which a beam cross-section of the radiation with an elongated, in particular an elliptical, cross-sectional shape with one semi-axis parallel to the principal section and one semi-axis at right angles to the principal section is adjusted in the two non-linear optical crystals (301, 302, 401, 402), wherein
the semi-axis parallel to the principal section is dimensioned such that in each case the ordinary and extraordinary waves overlap over the whole length of the crystals (301, 302, 401, 402) and the size of the semi-axis at right angles to the principal section is independently optimised with regard to high intensity.

9. The method according to Claim 8,
in which the beam cross-section for both non-linear optical crystals (301, 302, 401, 402) is adjusted in optics (100) located upstream of the first crystal (301, 302).

10. The method according to one of the Claims 1 to 9,
in which a ratio of the components of ordinary and extraordinary waves of the output frequency in the first crystal (301, 302) is adjusted by way of a polarisation rotator (200) located upstream of the first crystal (301, 302).

11. The method according to Claim 10,
in which the ratio of the components of ordinary and extraordinary waves of the output frequency in the first crystal (301, 302) is adjusted as a function of a power and/or wavelength of the radiation such that a maximum conversion efficiency ensues at the power and/or wavelength in question.

12. The method according to Claim 10 or 11,
in which an output power of frequency-converted radiation is measured downstream of the first (301, 302) and/or second crystal (401, 402) and supplied to a controller, which maximises the output power by way of control of a drive for rotation of the polarisation rotator (200), and/or of one or a plurality of drives for rotation of the first (301, 302) and/or second crystal (401, 402) for purposes of a phase matching.

13. The method according to one of the Claims 1 to 12, for purposes of generation of coherent radiation in the wavelength range between 205 and 510 nm.

14. An arrangement for the frequency conversion of coherent optical radiation,
in which an output frequency of the radiation is converted by way of a two-stage non-linear optical process into a higher frequency, with at least
- a first non-linear optical crystal (301, 302) for a frequency doubling,
- a second non-linear optical crystal (401, 402) located downstream of the first non-linear optical crystal (301, 302) for a sum frequency generation or a frequency doubling of radiation output from the first non-linear optical crytal (301, 302),
- optics located upstream of the first non-linear optical crystal (301, 302) for purposes of generation of a beam waist in the region of the two non-linear optical crystals (301, 302, 401, 402), and
- in each case a rotation device (901) for purposes of rotation of the two non-linear optical crystals (301, 302, 401, 402) for a phase matching at different wavelengths of the radiation, wherein
- the first non-linear optical crystal (301, 302) is a positively birefringent crystal, in which a frequency doubling takes place with a type I phase matching from an extraordinary wave at the output frequency according to the <eeo> conversion scheme, so that an ordinary wave is generated at the doubled output frequency, and
- the second non-linear optical crystal (401, 402) is selected such that a phase matching is enabled by rotation of the crystal (401, 402) in the same spatial plane in which the first non-linear optical crystal (301, 302) must also be rotated for phase matching.

15. The arrangement according to Claim 14,
in which a power measuring unit (601, 602, 603) for purposes of measuring an output power of frequency-converted radiation after the first (301, 302) and/or second crystal (401, 402), and a controller, are provided, which on the basis of a measurement signal received by the power measuring unit (601, 602, 603) controls one or a plurality of drives for the rotation devices (901) for purposes of rotation of the two non-linear optical crystals (301, 302, 401, 402) such that the output power is maximised.

16. The arrangement according to Claim 14,
in which a polarisation rotator (200) is located upstream of the first crystal (301, 302), with which a ratio of the components of ordinary and extraordinary waves of the output frequency in the first non-linear optical crystal (301, 302) can be adjusted.

17. The arrangement according to Claim 16,
in which a power measuring unit (601, 602, 603) for purposes of measuring an output power of frequency-converted radiation after the first (301, 302) and/or second crystal (401, 402), and a controller, are provided, which on the basis of a measurement signal received by the power measuring unit (601, 602, 603) controls a drive for rotation of the polarisation rotator (200) and/or of one or a plurality of drives for the rotation devices (901) for purposes of rotation of the two non-linear optical crystals (301, 302, 401, 402) such that the output power is maximised.

18. The arrangement according to one of the Claims 14 to 17,
in which the principal sections of the two non-linear optical crystals (301, 302, 401, 402) are oriented such that a beam displacement during rotation of the first non-linear optical crystal (301, 302) for a phase matching is at least partially compensated by a beam displacement in the opposite sense during rotation of the second non-linear optical crystal (401, 402) for a phase matching.

19. The arrangement according to one of the Claims 14 to 18,
in which the two non-linear optical crystals (301, 302, 401, 402) are arranged one behind the other without any optical elements interposed.

20. The arrangement according to one of the Claims 14 to 19,
in which a rotatable correction unit (501, 502, 503) is arranged downstream of the second non-linear optical crystal (401, 402) for purposes of equalising out a beam displacement.

21. The arrangement according to one of the Claims 14 to 20,
in which the two non-linear optical crystals (301, 401) form a first conversion unit for a frequency tripling in a first plane and a second conversion unit of like kind for a frequency quadrupling in a second plane, above or below the first plane, is arranged such that in each case the first (301, 302) and the second non-linear optical crystals (401, 402) of each conversion unit form a stack and are adjustable with the same rotation device (901) for purposes of a phase matching, and in which a switchable device (803) for purposes of beam deflection between the two planes is arranged upstream of the first non-linear optical crystal (301, 302).

22. The arrangement according to Claim 21,
in which at least a third non-linear optical crystal (303, 403) is arranged in a third plane for purposes of a frequency doubling, wherein
the third non-linear optical crystal (303, 403) with the first (301, 302) or second non-linear optical crystals (401, 402) forms a stack and can be adjusted with the same rotation device (901) for purposes of a phase matching, and in which the switchable device (803) is designed for beam deflection such that it can switch the radiation between the three planes for purposes of frequency conversion.

23. The arrangement according to one of the Claims 16 to 22,
which is designed for the frequency conversion of coherent optical radiation in a wavelength range and for at least one conversion process comprises a plurality of non-linear optical crystals (301-303, 401-403), which with regard to orientation and surface coating are optimised to a high conversion efficiency for smaller spectral ranges within the wavelength range, wherein
in each case a plurality of the non-linear optical crystals (301-303, 401-403) that are optimised for different smaller spectral ranges, are arranged in a plurality of planes one above the other on the same rotation device (901).

## Revendications

1. Procédé de conversion de fréquence de rayonnement optique cohérent avec longueur d'onde réglable, pour lequel une fréquence de sortie du rayonnement est convertie par un procédé optique non linéaire à deux étapes en une fréquence plus élevée,
dans lequel ont lieu dans une première étape de conversion dans un premier cristal (301, 302) optique non linéaire un doublage de fréquence et dans une deuxième étape de conversion dans un deuxième cristal optique non linéaire (401, 402) une production de fréquence somme ou doublement de fréquence du rayonnement émergeant du premier cristal optique non linéaire (301, 302),
pour lequel
- le rayonnement optique cohérent est injecté dans le premier cristal optique non linéaire (301, 302) de telle sorte qu'une onde au moins extraordinaire de la fréquence de sortie se propage dans le cristal (301, 302),
- un cristal à double réfraction positive est utilisé en tant que premier cristal (301, 302) non linaire optique, le doublage de fréquence lors d'une adaptation de phase de type I de l'onde extraordinaire de la fréquence de sortie ayant lieu selon le schéma de conversion <eeo> de telle sorte qu'une onde ordinaire de la fréquence de sortie doublée est produite et
- le deuxième cristal (401, 402) optique non linéaire est choisi de telle sorte qu'une adaptation de phase est rendue possible par rotation du cristal (401, 402) dans le même plan spatial dans lequel le premier cristal (301, 302) non linaire optique doit être également tourné lors d'une adaptation de phase.

2. Procédé selon la revendication 1 pour lequel le rayonnement est injecté dans le premier cristal (301, 302) optique non linéaire de telle sorte qu'une onde aussi bien ordinaire qu'extraordinaire de fréquence de sortie se propage dans le cristal (301, 302) et qu'une fréquence somme à partir de l'onde ordinaire de la fréquence de sortie et de l'onde ordinaire de la fréquence de sortie doublée est produite selon le schéma de conversion <ooe> dans le deuxième cristal optique non linéaire (401, 402) lors d'une adaptation de phase de type I.

3. Procédé selon la revendication 1 pour lequel une fréquence somme à partir de l'onde extraordinaire de la fréquence de sortie et de l'onde ordinaire de la fréquence de sortie doublée est produite selon le schéma de conversion <eoe> dans le deuxième cristal (401, 402) optique non linéaire lors d'une adaptation de phase de type II.

4. Procédé selon la revendication 1 pour lequel un doublage de fréquence de l'onde ordinaire de la fréquence de sortie doublée est effectué selon le schéma <ooe> dans le deuxième cristal (401, 402) non linaire optique lors d'une adaptation de phase de type I.

5. Procédé selon une quelconque des revendications 1 à 4 pour lequel un BIBO est utilisé en tant que premier cristal (301, 302) optique non linéaire.

6. Procédé selon une quelconque des revendications 1 à 5 pour lequel des sections principales des deux cristaux (301, 302, 401, 402) optiques non linaires sont orientées de telle sorte qu'un déport de faisceau lors de la rotation du premier cristal (301, 302) optique non linaire pour l'adaptation de phase est au moins partiellement compensé par un déport de faisceau en sens opposé lors de la rotation du deuxième cristal (401, 402) optique non linéaire pour l'adaptation de phase.

7. Procédé selon une quelconque des revendications 1 à 6 pour lequel les deux cristaux (301, 302, 401, 402) optiques non linaires sont disposés l'un derrière l'autre à une distance qui est plus faible que la demie longueur de Rayleigh du rayonnement dans la zone des cristaux (301, 302, 401, 402).

8. Procédé selon une quelconque des revendications 1 à 7 pour lequel une section de faisceau du rayonnement est réglée avec une forme de section longitudinale, en particulier elliptique avec un demi-axe parallèle à la section principale et un perpendiculaire à celle-ci dans les deux cristaux (301, 302), 401, 402) optiques non-linéaires, le demi-axe parallèle à la section principale étant dimensionné de telle sorte qu'à chaque fois les ondes ordinaires et extraordinaires se chevauchent sur toute la longueur des cristaux (301, 302, 401, 402) et la taille du demi-axe perpendiculaire à ceux-ci est optimisée indépendamment en ce qui concerne une intensité élevée.

9. Procédé selon la revendication 8 pour lequel la section de faisceau pour les deux cristaux (301, 302, 401, 402) optiques non linéaires est réglée dans un système optique monté en amont du premier cristal (301, 302).

10. Procédé selon une quelconque des revendications 1 à 9 pour lequel un rapport des parties d'onde ordinaire et extraordinaire de la fréquence de sortie est réglé dans le premier cristal (301, 302) par un régulateur rotatif de polarisation (200) monté en amont du premier cristal (301, 302).

11. Procédé selon la revendication 10 pour lequel le rapport des parties d'onde ordinaire et extraordinaire de la fréquence de sortie est réglé dans le premier cristal (301, 302) en fonction d'une puissance et/ou longueur d'onde du rayonnement de telle sorte qu'il en résulte une efficacité de conversion maximale pour la puissance et/ou longueur d'onde respective.

12. Procédé selon la revendication 10 ou 11 pour lequel une puissance de sortie de rayonnement converti en fréquence est mesurée d'après le premier (301, 302) et/ou le deuxième cristal (401, 402) et est acheminée à une régulation qui maximise la puissance de sortie par un pilotage d'une commande pour une rotation du régulateur rotatif de polarisation (200) et/ou d'une ou plusieurs commandes pour une rotation du premier (301, 302) et/ou du deuxième cristal (401, 402) pour l'adaptation de phase.

13. Procédé selon une quelconque des revendications 1 à 12 pour produire un rayonnement cohérent dans la plage de longueurs d'ondes située entre 205 et 510 nm.

14. Agencement pour la conversion de fréquence d'un rayonnement optique cohérent pour lequel une fréquence de sortie du rayonnement est convertie en une fréquence plus élevée par un processus optique non linéaire à deux étapes avec au moins
- un premier cristal (301, 302) optique non linéaire pour un doublage de fréquence,
- un deuxième cristal (401, 402) optique non linéaire monté en aval du premier cristal (301, 302) optique non linéaire pour une production de fréquence somme ou doublage de fréquence du rayonnement émergeant du premier cristal (301, 302) optique non linéaire,
- un système optique (100) monté en amont du premier cristal (301, 302) optique non linéaire pour produire une taille de faisceau de l'ordre des deux cristaux (301, 302, 401, 402) optiques non linéaires et
- à chaque fois un dispositif (901) pour faire tourner les deux cristaux (301, 302, 401, 402) optiques non linéaires pour une adaptation de phase à des longueurs d'ondes différentes du rayonnement,
pour lequel
- le premier cristal (301, 302) optique non linéaire est un cristal à double réfraction positive, dans lequel le doublage de fréquence a lieu lors d'une adaptation de fréquence de type I à partir d'une onde exceptionnelle de la fréquence de sortie selon le schéma de conversion <eeo> de sorte qu'une onde ordinaire de la fréquence de sortie doublée est produite
et
le deuxième cristal (401, 402) optique non linéaire est choisi de telle sorte qu'une adaptation de phase est rendue possible par rotation du cristal (401, 402) dans le même plan spatial dans lequel le premier cristal (301, 302) optique non linéaire doit être également tourné lors d'une adaptation de phase.

15. Agencement selon la revendication 14 pour lequel un appareil de mesure de puissance (601, 602, 603) pour mesurer une puissance de sortie de rayonnement converti en fréquence après le premier (301, 302) et/ou le deuxième cristal (401, 402) et une unité de régulation sont prévus, qui activent une ou plusieurs commandes sur la base d'un signal de mesure reçu de l'appareil de mesure de puissance (601, 602, 603) pour les dispositifs rotatifs (901) pour la rotation des deux cristaux (301, 302, 401, 402) optiques non linéaires de telle sorte que la puissance de sortie est maximisée.

16. Agencement selon la revendication 14 pour lequel un régulateur rotatif de polarisation (200) est disposé avant le premier cristal (301, 302) optique non linéaire avec lequel il est possible de régler un rapport des parties d'onde ordinaire et extraordinaire de la fréquence de sortie dans le premier cristal (301, 302) optique non linéaire.

17. Agencement selon la revendication 16 pour lequel un appareil de mesure de puissance (601, 602, 603) pour mesurer une puissance de sortie de rayonnement converti en fréquence après le premier (301, 302) et/ou le deuxième cristal (401, 402) et une unité de régulation sont prévus, qui activent une commande sur la base d'un signal de mesure reçu de l'appareil de mesure de puissance (601, 602, 603) pour une rotation du régulateur rotatif de polarisation (200) et/ou d'une ou plusieurs commandes pour les dispositifs rotatifs (901) pour la rotation des deux cristaux optiques non linéaires (301, 302, 401, 402) de telle sorte que la puissance de sortie est maximisée.

18. Agencement selon une quelconque des revendications 14 à 17 pour lequel des sections principales des deux cristaux (301, 302, 401, 402) optiques non linéaires sont orientées de telle sorte qu'un déport de faisceau lors de la rotation du premier cristal (301, 302) optique non linéaire pour l'adaptation de phase est au moins partiellement compensé par un déport de faisceau en sens opposé lors de la rotation du deuxième cristal (401, 402) optique non linéaire pour l'adaptation de phase.

19. Agencement selon une quelconque des revendications 14 à 18 pour lequel les deux cristaux (301, 302, 401, 402) optiques non linéaires sont disposés l'un derrière l'autre sans éléments optiques intercalés.

20. Agencement selon une quelconque des revendications 14 à 19 pour lequel derrière le deuxième cristal (401, 402) optique non linéaire est disposé une unité de correction (501, 502, 503) rotative pour compenser un déport de faisceau.

21. Agencement selon une quelconque des revendications 14 à 20 pour lequel les deux cristaux (301, 401) optiques non linéaires forment dans un premier plan une première unité de conversion pour un triplage de fréquence et une deuxième unité de conversion analogue pour un quadruplage de fréquence est disposée dans un deuxième plan au-dessus et en dessous du premier plan de telle sorte qu'à chaque fois le premier (301, 302) et le deuxième cristal (401, 402) optique non linéaire de chaque unité de conversion forment une pile et peuvent être réglés avec le même dispositif rotatif (901) pour l'adaptation de phase et pour lequel un dispositif inversable (803) pour la déviation du faisceau entre les deux plans est disposé avant le premier cristal (301, 302) optique non linéaire.

22. Agencement selon la revendication 21 pour lequel au moins un troisième cristal (303, 403) optique non linéaire pour un doublage de fréquence est disposé dans un troisième plan, le troisième cristal (303, 403) optique non linaire formant avec le premier cristal (301, 401) optique non linéaire ou le deuxième cristal (302, 402) optique non linéaire une pile et étant réglable avec le même dispositif rotatif (901) pour l'adaptation de phase et pour lequel le dispositif inversable (803) pour la déviation du faisceau est constitué de telle sorte qu'il peut inverser le rayonnement pour la conversion de fréquence entre les trois plans.

23. Agencement selon une quelconque des revendications 16 à 22 qui est constitué pour la conversion de fréquence d'un rayonnement optique cohérent d'une plage de longueurs d'ondes et comprend pour au moins un processus de conversion plusieurs cristaux (301-303, 401-403) optiques non linéaires qui sont optimisés à une efficacité de conversion élevée eu égard à l'orientation et au revêtement de surface pour des plages spectrales plus faibles à l'intérieur de la plage de longueurs d'ondes, plusieurs des cristaux (301-303, 401-403) optiques non linéaires, qui sont optimisés pour différentes plages spectrales plus faibles, étant disposés dans plusieurs plans l'un sur l'autre sur le même dispositif rotatif (901).
